# EUROPEAN PATENT APPLICATION

(11) **EP 4 607 830 A1**
(43) Date of publication of application: **27.08.2025**
(21) Application number: 23879043.0
(22) Date of filing: 15.10.2023
(51) Int. Cl.: H04L 1/1607

(54) **METHOD AND APPARATUS USED IN WIRELESS COMMUNICATION**

(30) Priority: 20.10.2022 CN 202211286972
(71) Applicant: Apogee Networks, LLC, Dallas, TX 75201 (US)
(72) Inventor: ZHANG, Jinfang, Shanghai 201206 (CN); ZHANG, Xiaobo, Shanghai 201206 (CN)
(74) Representative: Gunzelmann, Rainer
(86) International application number: PCT/CN2023/124633
(87) International publication number: WO 2024/083054

(57) **Abstract**

Disclosed in the present application are a method and apparatus used in wireless communication. The method comprises: a first node receiving a first message, the first message indicating that HARQ feedback is not enabled; receiving a first wireless signal in a first RRC state, the first wireless signal being scrambled by a first multicast RNTI; and decoding the first wireless signal failing, wherein a first transmission block is used for generating the first wireless signal; whether to monitor retransmission of the first transmission block in a first time window is related to the first RRC state, when the first wireless signal is received in the first RRC state, which is an RRC inactive state, the retransmission of the first transmission block is monitored in the first time window, and when the first wireless signal is received in the first RRC state, which is an RRC state other than the RRC inactive state, the retransmission of the first transmission block does not need to be monitored in the first time window; and the first time window is the maximum duration for which multicast HARQ retransmission is received. The present application can improve MBS receiving quality.

## Description

### Technical Field

The present application relates to a method and apparatus used in a wireless communication system, and in particular, to a method and apparatus for receiving an MBS in wireless communication.

### Related Art

Although multicast/broadcast (multicast/broadcast) transmission characteristics are not supported in the earliest versions of 5G (Fifth Generation), i.e. version 15 and version 16, in many important application scenarios, such as public safety (public safety) and mission critical (mission critical), V2X (Vehicle-to-Everything) applications, software delivery (software delivery), and group communications (group communications), one-to-many transmission characteristics of multicast/broadcast communications can significantly improve system performance and user experience. To support the multicast/broadcast communications, 5G broadcast evolution is discussed between the 78^{th} Plenary Session and the 80^{th} Plenary Session for a 3GPP (3rd Generation Partner Project) RAN (Radio Access Network). A study item (SI, Study Item) of architecture evolution of 5G broadcast services is accepted at the 85^{th} Session for SA (Service and System Aspects). To support reliable transmission of an MBS (multicast/broadcast service), 3GPP studies transmission of the MBS in an RRC connected (RRC_CONNECTED) state in Rel-17. Because the MBS is mainly aimed at a large quantity of receiving users, to still effectively support the MBS in a network congestion scenario and reduce power consumption of a UE (User Equipment), 3GPP starts to discuss supporting the MBS in an RRC inactive (RRC_INACTIVE) state in Rel-18.

The RRC inactive state is an RRC (radio resource control) state newly introduced to an NR (New Radio). When the UE enters the RRC inactive state, the UE may reserve some network configuration information. When a service arrives, the UE may perform data transmission after re-entering the RRC connected state.

DRX (Discontinuous Reception) is a common method in cellular communication, and can reduce power consumption of the UE and increase standby time. A base station configures parameters of a timer related to the DRX by RRC, and controls, by using a DCI (Downlink Control Information) or MAC (Medium Access Control) CE (Control Element), operation of the timer related to the DRX, so as to control whether the UE performs wireless reception in a given slot or subframe.

### SUMMARY

By means of study, the inventor finds that, when a UE enters an RRC inactive state, only downlink multicast transmission is received without execution of an HARQ feedback. When DRX reception is configured, the UE may not open a retransmission window to monitor HARQ retransmission (retransmission), causing a risk that MBS receiving quality is degraded.

The present application discloses a solution. To be specific, a UE configured with DRX monitors, in an RRC inactive state, HARQ retransmission, to obtain a combined decoding gain, reduce a packet error rate, and improve receiving quality. Although the present application is originally aimed at a Uu air interface, the present application can also be applied to a PC5 air interface. Further, although the present application is originally aimed at a scenario of a terminal and a base station, the present application is also applicable to a V2X (Vehicle-to-Everything) scenario, a scenario of communication between a terminal and a relay, and a scenario of communication between a relay and a base station, to obtain a technical effect similar to that in the scenario of the terminal and the base station. In addition, a unified solution in different scenarios (including but not limited to an uplink communication scenario) further helps to reduce hardware complexity and costs. Without conflicts, an embodiment in a first node of the present application and features in this embodiment may be applied to any other node, and vice versa. The embodiments of the present application and features in the embodiments may be randomly combined with each other without conflicts. In particular, for explanations (if not especially described) of terminology (Terminology), nouns, functions, and variables in the present application, reference may be made to definitions in a TS36 series, a TS38 series, and a TS37 series of 3GPP specification protocols.

The present application discloses a method used in a first node for wireless communication. The method includes:
receiving a first message, where the first message indicates that an HARQ feedback is disabled;
receiving a first wireless signal in a first RRC state, where the first wireless signal is scrambled by a first multicast RNTI; and
failing to decode the first wireless signal.

A first transport block is used for generating the first wireless signal. Whether to monitor retransmission of the first transport block in a first time window is related to the first RRC state. When the first wireless signal is received in the first RRC state, which is an RRC inactive state, the retransmission of the first transport block is monitored in the first time window. When the first wireless signal is received in the first RRC state, which is an RRC state other than the RRC inactive state, the retransmission of the first transport block needs not (needs not) to be monitored in the first time window. The first time window is a maximum duration for which multicast HARQ retransmission is received.

As an embodiment, in the foregoing method, determining, according to the first RRC state, whether to monitor retransmission of the first transport block may be backward compatible, to obtain flexibility.

As an embodiment, in the foregoing method, the retransmission of the first transport block is monitored in the RRC inactive state when the HARQ (Hybrid Automatic Repeat Request) feedback is disabled, so that a packet loss rate can be reduced effectively by using an HARQ feedback of another user.

As an embodiment, in the foregoing method, the retransmission of the first transport block is monitored in the RRC inactive state when the HARQ feedback is disabled, so that power consumption of the UE can be reduced while a transmission gain is obtained.

As an embodiment, in the foregoing method, the retransmission of the first transport block is monitored in the RRC inactive state when the HARQ feedback is disabled, so that uplink signaling interaction can be avoided while the transmission gain is obtained.

As an embodiment, in the foregoing method, the retransmission of the first transport block is monitored in the RRC inactive state when the HARQ feedback is disabled, so that complexity of the UE in the RRC inactive state can be effectively reduced while the transmission gain is obtained.

As an embodiment, the foregoing method is configured by a network when receiving an MBS in an RRC state other than the RRC inactive state, so that a network design can be simplified.

As an embodiment, the foregoing method is configured by the network when receiving the MBS in the RRC state other than the RRC inactive state, so that synchronization between information of the network and information of the UE can be maintained, thereby avoiding a misoperation.

As an embodiment, that an HARQ feedback is disabled includes: the HARQ feedback is not performed according to a decoding result.

According to one aspect of the present application,
the monitoring the retransmission of the first transport block in the first time window when the first wireless signal is received in the first RRC state, which is an RRC inactive state, is performed only when all conditions in a first condition set are satisfied.

The first condition set includes a first condition. A channel quality of a first cell being worse than a first threshold is used for determining that the first condition is satisfied. The first cell is a serving cell of the first node.

As an embodiment, the channel quality of the first cell being equal to the first threshold is used for determining that the first condition is satisfied.

As an embodiment, the foregoing method can improve UE flexibility.

As an embodiment, in the foregoing method, the retransmission of the first transport block is monitored when the channel quality of the first cell is worse than the first threshold, so that consistent user experience can be obtained.

As an embodiment, in the foregoing method, adaptive adjustment is performed according to the channel quality of the first cell, so that a beneficial effect of power saving can be obtained while ensuring consistent user experience.

According to one aspect of the present application,
a first processor is configured to: start a first timer at a first time, where the first time is not earlier than a receiving time of the first wireless signal; and start a second timer in response to expiration of the first timer.

The first time window is time when the second timer is in an operating state. The first RRC state is the RRC inactive state. The first timer and the second timer are separately specific to an HARQ process corresponding to the first wireless signal.

As an embodiment, in the foregoing method, a unified solution used in an RRC connected state contributes to reducing hardware complexity and costs.

According to one aspect of the present application,
the first time is a first symbol immediately after the first wireless signal ends.

As an embodiment, the foregoing method supports repetition (repetition), so that the packet loss rate can be reduced.

As an embodiment, the foregoing method adapts to flexible scheduling of a base station, so that the packet loss rate can be lowered.

It should be noted that repetition and retransmission are different. The repetition may not rely on a feedback. The retransmission relies on a feedback, and the feedback is negative acknowledgment (Negative ACKnowledgment, NACK).

According to one aspect of the present application,
the first time is a first symbol immediately after a first PUCCH resource ends.

The first PUCCH resource is configured for an HARQ feedback specific to the first wireless signal.

As an embodiment, the first PUCCH (Physical Uplink Control Channel) resource is not used for sending HARQ feedback specific to a decoding result of the first wireless signal.

As an embodiment, in the foregoing method, a unified first time window in the RRC connected state is obtained, which contributes to reducing the hardware complexity and costs.

According to one aspect of the present application,
the first receiver receives a second message, where the second message indicates a first expiration value and a second expiration value.

The first expiration value is used for determining that the first timer expires. The second expiration value is used for determining that the second timer expires.

According to one aspect of the present application,
the first receiver receives a third message before receiving the first message, where the third message indicates that the HARQ feedback is enabled.

The first message indicates that the first node enters the RRC inactive state.

As an embodiment, the first node is in the RRC connected state when receiving the third message.

As an embodiment, that HARQ feedback is enabled includes: the HARQ feedback is performed according to a decoding result.

As an embodiment, in the foregoing method, the HARQ feedback is performed according to the decoding result in the RRC connected state, and the HARQ feedback is not performed according to the decoding result in the RRC inactive state.

As an embodiment, in the foregoing method, the UE is switched to the RRC inactive state for receiving, so that power consumption of the UE can be reduced.

As an embodiment, in the foregoing method, the UE is switched to the RRC inactive state for receiving, so that system congestion can be avoided.

The present application discloses a method used in a second node for wireless communication. The method includes:
sending a first message, where the first message indicates that an HARQ feedback is disabled; and
sending a first wireless signal, where the first wireless signal is scrambled by a first multicast RNTI.

Decoding the first wireless signal fails. A first transport block is used for generating the first wireless signal. Whether a receiver of the first message monitors retransmission of the first transport block in a first time window is related to the first RRC state in which the first wireless signal is received. When the first wireless signal is received in the first RRC state, which is an RRC inactive state, the retransmission of the first transport block is monitored in the first time window. When the first wireless signal is received in the first RRC state, which is an RRC state other than the RRC inactive state, the retransmission of the first transport block needs not (needs not) to be monitored in the first time window. The first time window is a maximum duration for which multicast HARQ retransmission is received.

According to one aspect of the present application,
the monitoring the retransmission of the first transport block in the first time window when the first wireless signal is received in the first RRC state, which is an RRC inactive state, is performed only when all conditions in a first condition set are satisfied.

The first condition set includes a first condition. A channel quality of a first cell being worse than a first threshold is used for determining that the first condition is satisfied. The first cell is a serving cell of the receiver of the first message.

According to one aspect of the present application, the method includes:
starting the first timer at a first time, where the first time is not earlier than a receiving time of the first wireless signal; and starting the second timer in response to expiration of the first timer.

The first time window is time when the second timer is in an operating state. The first RRC state is the RRC inactive state. The first timer and the second timer are separately specific to an HARQ process corresponding to the first wireless signal.

According to one aspect of the present application,
the first time is a first symbol immediately after the first wireless signal ends.

According to one aspect of the present application,
the first time is a first symbol immediately after a first PUCCH resource ends.

The first PUCCH resource is configured for an HARQ feedback specific to the first wireless signal.

According to one aspect of the present application, the method includes:
sending a second message, where the second message indicates a first expiration value and a second expiration value.

The first expiration value is used for determining that the first timer expires. The second expiration value is used for determining that the second timer expires.

According to one aspect of the present application, the method includes:
sending a third message before sending the first message, where the third message indicates that the HARQ feedback is enabled.

The first message indicates that the receiver of the first message enters the RRC inactive state.

The present application discloses a first node used in wireless communication. The first node includes:
a first receiver, configured to: receive a first message, the first message indicating that an HARQ feedback is disabled; receive a first wireless signal in a first RRC state, where the first wireless signal is scrambled by a first multicast RNTI; and fail to decode the first wireless signal.

A first transport block is used for generating the first wireless signal. Whether to monitor retransmission of the first transport block in a first time window is related to the first RRC state. When the first wireless signal is received in the first RRC state, which is an RRC inactive state, the retransmission of the first transport block is monitored in the first time window. When the first wireless signal is received in the first RRC state, which is an RRC state other than the RRC inactive state, the retransmission of the first transport block needs not (needs not) to be monitored in the first time window. The first time window is a maximum duration for which multicast HARQ retransmission is received.

The present application discloses a second node used in wireless communication. The second node includes:
a first transmitter, configured to: send a first message, where the first message indicates that an HARQ feedback is disabled; and send a first wireless signal, where the first wireless signal is scrambled by a first multicast RNTI.

Decoding the first wireless signal fails. A first transport block is used for generating the first wireless signal. Whether a receiver of the first message monitors retransmission of the first transport block in a first time window is related to the first RRC state in which the first wireless signal is received. When the first wireless signal is received in the first RRC state, which is an RRC inactive state, the retransmission of the first transport block is monitored in the first time window. When the first wireless signal is received in the first RRC state, which is an RRC state other than the RRC inactive state, the retransmission of the first transport block needs not (needs not) to be monitored in the first time window. The first time window is a maximum duration for which multicast HARQ retransmission is received.

### BRIEF DESCRIPTION OF THE DRAWINGS

Other features, objectives, and advantages of the present application will become clearer by reading detailed descriptions of non-restrictive embodiments with reference to the following accompanying drawings.
FIG. 1 exemplarily shows a transmission flowchart of a first node according to an embodiment of the present application;
FIG. 2 exemplarily shows a schematic diagram of a network architecture according to an embodiment of the present application;
FIG. 3 exemplarily shows a schematic diagram of a radio protocol architecture of a user plane and a control plane according to an embodiment of the present application;
FIG. 4 exemplarily shows a schematic diagram of a hardware module of a communication device according to an embodiment of the present application;
FIG. 5 exemplarily shows a transmission flowchart of a wireless signal according to an embodiment of the present application;
FIG. 6 exemplarily shows another transmission flowchart of a wireless signal according to an embodiment of the present application;
FIG. 7 exemplarily shows a schematic diagram of a first wireless signal, a first time, a first timer, a second timer, and a first time window according to an embodiment of the present application;
FIG. 8 exemplarily shows a schematic diagram of a first wireless signal, a first PUCCH resource, a first time, a first timer, a second timer, and a first time window according to an embodiment of the present application;
FIG. 9 exemplarily shows a schematic diagram of operation of a first timer according to an embodiment of the present application;
FIG. 10 exemplarily shows a flowchart of signal processing in a first node according to an embodiment of the present application;
FIG. 11 exemplarily shows a structural block diagram of a processing apparatus in a first node according to an embodiment of the present application; and
FIG. 12 exemplarily shows a structural block diagram of a processing apparatus in a first node according to an embodiment of the present application.

### DETAILED DESCRIPTION

The following further describes the technical solutions of the present application in detail with reference to the accompanying drawings. It should be noted that the embodiments of the present application and features in the embodiments may be randomly combined with each other without conflicts.

### Embodiment 1

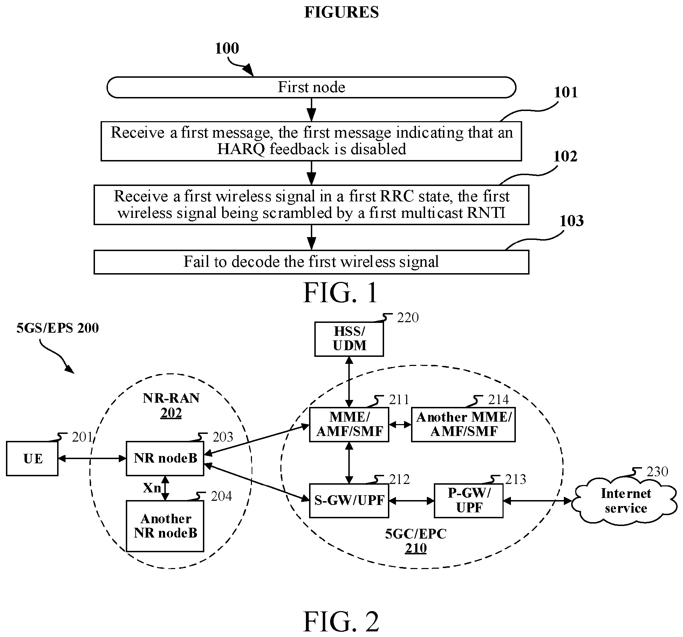

Embodiment 1 exemplarily shows a transmission flowchart of a first node according to an embodiment of the present application, and as shown in FIG. 1.

In Embodiment 1, a first node 100 receives a first message in step 101. The first message indicates that an HARQ feedback is disabled. A first wireless signal is received in a first RRC state in step 102. The first wireless signal is scrambled by a first multicast RNTI. Decoding the first wireless signal fails in step 103. A first transport block is used for generating the first wireless signal. Whether to monitor retransmission of the first transport block in a first time window is related to the first RRC state. When the first wireless signal is received in the first RRC state, which is an RRC inactive state, the retransmission of the first transport block is monitored in the first time window. When the first wireless signal is received in the first RRC state, which is an RRC state other than the RRC inactive state, the retransmission of the first transport block needs not (needs not) to be monitored in the first time window. The first time window is a maximum duration for which multicast HARQ retransmission is received.

As an embodiment, the first message is received by using an air interface.

As an embodiment, the air interface is a Uu air interface.

As an embodiment, the air interface is a PC5 air interface.

As an embodiment, the first message is sent in unicast.

As an embodiment, the first message is UE-specific.

As an embodiment, the first message is a physical layer message.

As an embodiment, the first message is an MAC sublayer message.

As an embodiment, the first message is a high layer message.

As an embodiment, the first message is an RRC layer message.

As an embodiment, the first message includes all or some of IEs (Information Element) in an RRC signaling.

As an embodiment, the first message includes all or some fields (Field) of an IE (Information Element) in an RRC signaling.

As an embodiment, the first message implicitly indicates that the HARQ feedback is disabled (disabled).

As an embodiment, the first message explicitly indicates that the HARQ feedback is disabled.

As an embodiment, the HARQ feedback is an HARQ feedback specific to multicast transmission.

As an embodiment, the first message is RRCReconfiguration (RRC reconfiguration).

As a sub-embodiment of the foregoing embodiment, when the first message does not include an harq-FeedbackEnablerMulticast (HARQ feedback enabler multicast) field, it is indicated that the HARQ feedback is disabled.

As a sub-embodiment of the foregoing embodiment, the first message is used for configuring parameters related to multicast transmission.

As a sub-embodiment of the foregoing embodiment, the first message is received in an RRC connected state.

As an embodiment, the first message is DCI (Downlink Control Information).

As a sub-embodiment of the foregoing embodiment, an Enabling/disabling HARQ-ACK feedback indication (enabling/disabling HARQ-ACK (acknowledgment) feedback indication) field of the first message indicates that the HARQ feedback is disabled.

As a sub-embodiment of the foregoing embodiment, the first message is received in the RRC connected state.

As an embodiment, the first message is RRCRelease (RRC release). The first message indicates that multicast transmission is received in an RRC inactive state.

As a sub-embodiment of the foregoing embodiment, the first message includes a configuration message received in multicast.

As a sub-embodiment of the foregoing embodiment, the first message is used for indicating that an RRC connection is suspended.

As a sub-embodiment of the foregoing embodiment, the first message indicates at least one radio bearer. The at least one radio bearer includes a first MRB (MBS Radio Bearer, multicast/broadcast service radio bearer). When a data unit of the first MRB is sent on an air interface, the data unit is scrambled by the first RNTI (Radio Network Temporary Identifier).

As a sub-embodiment of the foregoing embodiment, the first message is received in the RRC connected state.

As a sub-embodiment of the foregoing embodiment, before and after receiving the first message, the first MRB is in an active state.

As an embodiment, the first transport block belongs to the first MRB.

As an embodiment, the first MRB is a multicast MRB.

As an embodiment, the first MRB is used for configuring an MBS transmitted in a multicast mode.

As an embodiment, the first MRB is not a broadcast MRB.

As an embodiment, the configuration message included in the first message for receiving the multicast transmission in the RRC inactive state implicitly indicates that the HARQ feedback is disabled.

As an embodiment, the configuration message included in the first message for receiving the multicast transmission in the RRC inactive state explicitly indicates that the HARQ feedback is disabled.

As an embodiment, the first message is a response to an RRC connection resume request message.

As an embodiment, the first message is a first message received after the RRC connection resume request message is sent.

As a sub-embodiment of the foregoing two embodiments, the first message is not an RRC reconfiguration message or an RRC release message.

As a sub-embodiment of the foregoing two embodiments, the first message is scrambled by the first multicast RNTI.

As a sub-embodiment of the foregoing two embodiments, the first message carries a data unit of the first MRB.

As a sub-embodiment of the foregoing two embodiments, the first message is sent in a multicast mode.

As a sub-embodiment of the foregoing two embodiments, the first message is received in the RRC inactive state.

As an embodiment, the first MRB is activated while the RRC connection resume request message is sent. The first MRB is suspended before the RRC connection resume request message is sent. The first transport block belongs to the first MRB.

As an embodiment, the RRC connection resume request message is triggered by a paging message. The paging message includes an MBS session (session) joined (join) by the first node. The MBS session is indicated by a TMGI (Temporary Mobile Group Identity). An MBS identified by the TMGI is scrambled by the first multicast RNTI when being sent on the air interface.

As an embodiment, the RRC connection resume request message is an RRCResumeRequest (RRC resume request).

As an embodiment, the RRC connection resume request message is RRCResumeRequest1 (RRC resume request 1).

As an embodiment, a first wireless signal is received in a first RRC state. The first wireless signal is scrambled by a first multicast RNTI.

As an embodiment, the first RRC state is either an RRC connected state or an RRC inactive state.

As an embodiment, the first RRC state is one of an RRC connected state, an RRC inactive state, or an RRC idle state (RRC_IDLE).

As an embodiment, that the first wireless signal is scrambled by a first multicast RNTI includes: the first wireless signal is transmitted in multicast.

As an embodiment, that the first wireless signal is scrambled by a first multicast RNTI includes: the first wireless signal is transmitted by using a PTM.

As an embodiment, that the first wireless signal is scrambled by a first multicast RNTI includes: a target receiver of the first wireless signal includes at least two nodes. The at least two nodes include the first node.

As an embodiment, the first multicast RNTI is a first G-RNTI (Group-RNTI).

As a sub-embodiment of the foregoing embodiment, the first wireless signal is first transmission of the first transport block.

As a sub-embodiment of the foregoing embodiment, the first wireless signal is dynamically scheduled, the first wireless signal is retransmission of the first transport block, and the first transmission of the first transport block is dynamically scheduled.

As an embodiment, the first multicast RNTI is a first G-CS-RNTI (Group Configured Scheduling RNTI).

As a sub-embodiment of the foregoing embodiment, the first wireless signal is dynamically scheduled, the first wireless signal is retransmission of the first transport block, and the first transmission of the first transport block is semi-persistent scheduling (Semi-Persistent Scheduling, SPS).

As an embodiment, first transmission of a transport block includes: new transmission (new transmission).

As an embodiment, first transmission of a transport block includes: an NDI (New Data Indicator) included in a PDCCH (Physical Downlink Control CHannel) scheduling a transport block is toggled.

As an embodiment, the first wireless signal is a PSDCH (Physical Downlink Shared CHannel).

As an embodiment, the first wireless signal is a PSSCH (Physical Sidelink Shared CHannel).

As an embodiment, a first transport block (Transport Block, TB) is used for generating the first wireless signal.

As an embodiment, all or some of bits of the first transport block are used for generating the first wireless signal.

As an embodiment, all or some of the bits of the first transport block and a reference signal are used together for generating the first wireless signal.

As an embodiment, CRC calculation (CRC Calculation), channel coding (Channel Coding), rate matching (Rate matching), scrambling (Scrambling), modulation (Modulation), layer mapping (Layer Mapping), antenna port mapping (Antenna Port Mapping), mapping to virtual resource blocks (Mapping to Virtual Resource Blocks), mapping from virtual to physical resource blocks (Mapping from Virtual to Physical Resource Blocks), OFDM baseband signal generation (OFDM Baseband Signal Generation), and modulation and up conversion (Modulation and Up conversion) are sequentially performed on all or some of the bits of the first transport block to obtain the first wireless signal.

As an embodiment, the first transport block is a MAC PDU (Protocol Data Unit).

As a sub-embodiment of the foregoing embodiment, the first transport block includes at least one MAC SDU (Service Data Unit). One MAC SDU of the at least one MAC SDU belongs to the first MRB.

As a sub-embodiment of the foregoing embodiment, the first transport block includes a data unit belonging to the first MRB.

As an embodiment, the first transport block includes at least one byte.

As an embodiment, the first transport block includes at least one bit.

As an embodiment, decoding of the first wireless signal fails.

As an embodiment, the failing to decode the first wireless signal includes: decoding the first wireless signal to obtain a first bit string, where a CRC check of the first bit string fails.

As an embodiment, the failing to decode the first wireless signal includes: performing channel decoding on the first wireless signal, where a CRC check of a channel decoding result on the first wireless signal fails.

As an embodiment, whether to monitor retransmission of the first transport block in the first time window is related to the first RRC state.

As an embodiment, the monitoring refers to receiving based on blind detection.

As an embodiment, the monitoring refers to receiving based on coherent detection.

As an embodiment, the monitoring refers to receiving based on energy detection.

As an embodiment, the monitoring retransmission of the first transport block includes: monitoring a PDCCH indicating retransmission of the first transport block.

As an embodiment, when the retransmission of the first transport block is monitored, the first node performs decoding or combined decoding on a wireless signal scheduled by the PDCCH to recover the first transport block.

As an embodiment, the PDCCH scrambled by the first multicast RNTI is received, and a decoding operation is performed. If it is determined according to a CRC check that the decoding is correct, when an HARQ process number included in corresponding DCI is the same as an HARQ process number corresponding to the first wireless signal, and a new data indicator (NDI) field is not toggled (toggled), it is determined that the retransmission of the first transport block is monitored. The first multicast RNTI is the first G-RNTI.

As an embodiment, a PDCCH scrambled by a second multicast RNTI is received, and a decoding operation is performed. If it is determined according to a CRC check that the decoding is correct, when an HARQ process number included in corresponding DCI is the same as an HARQ process number corresponding to the first wireless signal, and a new data indicator field is set to 1, it is determined that the retransmission of the first transport block is monitored. The first multicast RNTI is the first G-RNTI, and the second multicast RNTI is the first G-CS-RNTI.

As an embodiment, the PDCCH scrambled by the first multicast RNTI is received, and a decoding operation is performed. If it is determined according to a CRC check that the decoding is correct, when an HARQ process number included in corresponding DCI is the same as an HARQ process number corresponding to the first wireless signal, and a new data indicator field is set to 1, it is determined that the retransmission of the first transport block is monitored. The first multicast RNTI is the first G-CS-RNTI.

As an embodiment, when the retransmission of the first transport block is monitored, the monitored PDCCH is a PDCCH in which an HARQ process number nearest following the first wireless signal is the same as an HARQ process number corresponding to the first wireless signal.

As an embodiment, that a new data indicator field is not toggled includes: an NDI included in the corresponding DCI is the same as an NDI included in the DCI scheduling the first wireless signal.

As an embodiment, that a new data indicator field is not toggled includes: a value of the NDI included in the corresponding DCI is 0, and a value of the NDI included in the DCI scheduling the first wireless signal is 0.

As an embodiment, that a new data indicator field is not toggled includes: a value of the NDI included in the corresponding DCI is 1, and a value of the NDI included in the DCI scheduling the first wireless signal is 1.

As an embodiment, the semi-persistent scheduling includes: a configured grant (configured grant).

As an embodiment, the semi-persistent scheduling includes: a configured assignment (configured assignment).

As an embodiment, when the first wireless signal is received in the first RRC state, which is an RRC inactive state, the retransmission of the first transport block is monitored in the first time window.

As an embodiment, when the first wireless signal is received in the first RRC state, which is an RRC state other than an RRC inactive state, the retransmission of the first transport block needs not (needs not) to be monitored in the first time window. The RRC state other than the RRC inactive state is one of an RRC connected state or an RRC idle state.

As an embodiment, when the first wireless signal is received in the first RRC state, which is an RRC connected state, the retransmission of the first transport block needs not (needs not) to be monitored in the first time window.

As an embodiment, when the first wireless signal is received in the first RRC state, which is an RRC inactive state, the first receiver monitors the retransmission of the first transport block.

As an embodiment, when the first wireless signal is received in the first RRC state, which is an RRC state other than an RRC inactive state, the first receiver needs not to monitor the retransmission of the first transport block.

As an embodiment, that the retransmission of the first transport block needs not (needs not) to be monitored includes: the retransmission of the first transport block is not expected (not expect) to be received.

As an embodiment, that the retransmission of the first transport block needs not (needs not) to be monitored includes: monitoring of a wireless signal scrambled by the first multicast RNTI is canceled.

As an embodiment, that the retransmission of the first transport block needs not (needs not) to be monitored includes: whether to monitor the retransmission of the first transport block is UE implementation-related.

As an embodiment, the first time window includes duration of at least one symbol.

As an embodiment, the first time window includes duration of at least one slot.

As an embodiment, the first time window includes duration of at least one subframe.

As an embodiment, the first time window is a timer.

As an embodiment, the first time window is a maximum duration for which multicast HARQ retransmission is received.

As an embodiment, the multicast retransmission includes downlink multicast retransmission.

As an embodiment, the multicast retransmission includes secondary link multicast retransmission.

As an embodiment, the multicast retransmission includes relay multicast retransmission.

As an embodiment, that the first time window is a maximum duration for which multicast HARQ retransmission is received includes: the first time window is determined by using a timer related to a DRX of multicast transmission.

As an embodiment, that the first time window is a maximum duration for which multicast HARQ retransmission is received includes: the first time window is related to a time interval of the multicast HARQ retransmission.

As an embodiment, that the first time window is a maximum duration for which multicast HARQ retransmission is received includes: the first time window is determined by using a timer related to a DRX of the multicast HARQ retransmission.

As an embodiment, that the first time window is a maximum duration for which multicast HARQ retransmission is received includes: the first time window is a maximum duration for which a first multicast HARQ retransmission of the first transport block is received after the first wireless signal is received.

As an embodiment, that the first time window is a maximum duration for which multicast HARQ retransmission is received includes: an active time (active time) includes the first time window, and the first node monitors a PDCCH for the first multicast RNTI in the active time.

### Embodiment 2

Embodiment 2 exemplarily shows a schematic diagram of a network architecture according to an embodiment of the present application, as shown in FIG. 2. FIG. 2 shows a network architecture 200 of NR 5G, LTE (Long-Term Evolution), and LTE-A (Long-Term Evolution Advanced) systems. The NR 5G, LTE, or LTE-A network architecture 200 may be referred to as a 5GS (5G System)/EPS (Evolved Packet System) 200 or some other suitable terminology. The 5GS/EPS 200 may include one or more UEs (User Equipment) 201, an NG-RAN (next generation radio access network) 202, a 5GC (5G Core Network)/EPC (Evolved Packet Core) 210, an HSS (Home Subscriber Server)/UDM (Unified Data Management) 220, and an Internet service 230. The 5GS/EPS 200 may be interconnected to another access network, but for simplicity, these entities/interfaces are not shown. As shown in the figure, the 5GS/EPS 200 provides a packet-switched service. However, a person skilled in the art will easily understand that various concepts presented throughout the present application may be extended to a network providing a circuit-switched service or another cellular network. The NG-RAN includes an NR nodeB (gNB) 203 and another gNB 204. The gNB 203 provides user and control plane protocol terminations towards the UE 201. The gNB 203 may be connected to the another gNB 204 via an Xn interface (for example, a backhaul). An XnAP protocol of the Xn interface is used for transmitting a control plane message of a wireless network. A user plane protocol of the Xn interface is used for transmitting user plane data. The gNB 203 may alternatively be referred to as a base station, a base transceiver station, a radio base station, a radio transceiver, a transceiver function, a basic service set (Basic Service Set, BSS), an extended service set (Extended Service Set, ESS), a TRP (Transmission Reception Point), or some other suitable terminology. In an NTN network, the gNB 203 may be a satellite, an aircraft, or a ground base station relayed by using the satellite. The gNB 203 provides an access point to the 5GC/EPC 210 for the UE 201. An example of the UE 201 includes a cellular phone, a smart phone, a session initiation protocol (SIP) phone, a laptop computer, a personal digital assistant (PDA), a satellite radio, a global positioning system, a multimedia apparatus, a video apparatus, a digital audio player (for example, an MP3 player), a camera, a game console, an unmanned aerial vehicle, an aircraft, a narrow band Internet of Things device, a machine type communication device, transportation means, an automobile, an in-vehicle device, an in-vehicle communication unit, a wearable device, or any other similar functional apparatus. A person skilled in the art may alternatively refer to the UE 201 as a mobile station, a subscriber station, a mobile unit, a subscriber unit, a wireless unit, a remote unit, a mobile apparatus, a wireless apparatus, a wireless communication apparatus, a remote apparatus, a mobile subscriber station, an access terminal, a mobile terminal, a wireless terminal, a remote terminal, a handset, a user agent, a mobile client, a client, or some other suitable terminology. The gNB 203 is connected to the 5GC/EPC 210 by using an S1/NG interface. The 5GC/EPC 210 includes an MME (Mobility Management Entity)/AMF (Authentication Management Field)/SMF (Session Management Function) 211, another MME/AMF/SMF 214, an S-GW (Service Gateway)/UPF (User Plane Function) 212, and a P-GW (Packet Date Network Gateway)/UPF 213. The MME/AMF/SMF 211 is a control node that processes signaling between the UE 201 and the 5GC/EPC 210. Generally, the MME/AMF/SMF 211 provides bearer and connection management. All user IP (Internet Protocol) packets are delivered by using the S-GW/UPF 212. The S-GW/UPF 212 is connected to the P-GW/UPF 213. The P-GW provides UE IP address assignment and other functions. The P-GW/UPF 213 is connected to an Internet service 230. The Internet service 230 includes an Internet protocol service corresponding to an operator, and may specifically include the Internet, an Intranet, an IMS (IP Multimedia Subsystem), and a PS (Packet Switching) streaming service.

As an embodiment, the UE 201 corresponds to the first node in the present application.

As an embodiment, the gNB 203 corresponds to the second node in the present application.

As an embodiment, the UE 201 is a user equipment.

As an embodiment, the UE 201 is a relay device.

As an embodiment, the UE 201 is an RSU (RoadSide Unit).

As an embodiment, the gNB 203 is a macro cell (Macro Cell) base station.

As an embodiment, the gNB 203 is a micro cell (Micro Cell) base station.

As an embodiment, the gNB 203 is a pico cell (Pico Cell) base station.

As an embodiment, the gNB 203 is a home base station (Femtocell).

As an embodiment, the gNB 203 is a base station device supporting a large delay skew.

As an embodiment, the gNB 203 is a flight platform device.

As an embodiment, the gNB 203 is a satellite device.

As an embodiment, the gNB 203 is a base station device supporting a large delay skew.

As an embodiment, the gNB 203 is a test device (for example, a transceiver apparatus that simulates functions of a part of a base station, or a signaling tester).

As an embodiment, a radio link from the UE 201 to the gNB 203 is an uplink, and the uplink is used for performing uplink transmission.

As an embodiment, a radio link from the gNB 203 to the UE 201 is a downlink, and the downlink is used for performing downlink transmission.

As an embodiment, the UE 201 is connected to the gNB 203 by using a Uu interface.

### Embodiment 3

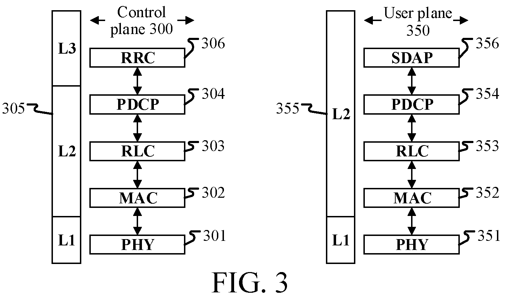

Embodiment 3 exemplarily shows a schematic diagram of a radio protocol architecture of a user plane and a control plane according to an embodiment of the present application, as shown in FIG. 3. FIG. 3 is a schematic diagram of an embodiment of a radio protocol architecture for a user plane 350 and a control plane 300. FIG. 3 shows the radio protocol architecture of the control plane 300 of a UE and a gNB by using three layers: layer 1, layer 2, and layer 3. Layer 1 (L1 layer) is the lowest layer and implements various PHY (physical layer) signal processing functions. The L1 layer is referred to as a PHY 301 in the present specification. Layer 2 (L2 layer) 305 is above the PHY 301, and is responsible for a link between the UE and the gNB through the PHY 301. The L2 layer 305 includes a MAC (Medium Access Control) sublayer 302, an RLC (Radio Link Control) sublayer 303, and a PDCP (Packet Data Convergence Protocol) sublayer 304. These sublayers terminate at a gNB on a network side. The PDCP sublayer 304 provides data ciphering and integrity protection. The PDCP sublayer 304 further provides inter-gNB handover support for the UE. The RLC sublayer 303 provides segmentation and recombination of a data packet, and implements retransmission of a lost data packet by using an ARQ (Automatic Repeat Request). The RLC sublayer 303 further provides repeated data packet detection and protocol error detection. The MAC sublayer 302 provides mapping between a logical channel and a transport channel and multiplexing of the logical channel. The MAC sublayer 302 is further responsible for assigning various radio resources (for example, resource blocks) in a cell between UEs. The MAC sublayer 302 is further responsible for an HARQ (Hybrid Automatic Repeat Request) operation. An RRC (Radio Resource Control) sublayer 306 in layer 3 (L3 layer) in the control plane 300 is responsible for obtaining a radio resource (i.e. a radio bearer) and configuring a lower layer by using an RRC signaling between the gNB and the UE. A radio protocol architecture of the user plane 350 includes layer 1 (L1 layer) and layer 2 (L2 layer). The radio protocol architecture in the user plane 350 is substantially the same as corresponding layers and sublayers in the control plane 300 for a physical layer 351, a PDCP sublayer 354 in an L2 layer 355, an RLC sublayer 353 in the L2 layer 355, and a MAC sublayer 352 in the L2 layer 355. However, the PDCP sublayer 354 further provides packet header compression for an upper data packet to reduce radio transmission overheads. The L2 layer 355 in the user plane 350 further includes an SDAP (Service Data Adaptation Protocol) sublayer 356. The SDAP sublayer 356 is responsible for mapping between a QoS stream and a data radio bearer (DRB, Data Radio Bearer), to support diversity of services. A radio protocol architecture of the UE in the user plane 350 at the L2 layer may include some or all protocol sublayers of the SDAP sublayer 356, the PDCP sublayer 354, the RLC sublayer 353, and the MAC sublayer 352. Although not shown in the figure, the UE may further have several upper layers above the L2 layer 355, including a network layer (for example, an IP layer) terminated at a P-GW on a network side and an application layer terminated at another end (for example, a remote UE or a server) of a connection.

As an embodiment, the radio protocol architecture in FIG. 3 is applicable to the first node in the present application.

As an embodiment, the radio protocol architecture in FIG. 3 is applicable to the second node in the present application.

As an embodiment, entities of a plurality of sublayers of the control plane in FIG. 3 form a signaling radio bearer (Signaling Radio Bearer, SRB) in a vertical direction.

As an embodiment, entities of a plurality of sublayers of the user plane in FIG. 3 form a DRB in the vertical direction.

As an embodiment, entities of a plurality of sublayers of the user plane in FIG. 3 form a multicast MRB in the vertical direction.

As an embodiment, the first message in the present application is generated at the RRC 306.

As an embodiment, the first message in the present application is generated at the PHY 301 or the PHY 351.

As an embodiment, the first message in the present application is generated at the MAC 302 or the MAC 352.

As an embodiment, the first wireless signal in the present application is generated at the PHY 301 or the PHY 351.

As an embodiment, the second message in the present application is generated at the RRC 306.

As an embodiment, the third message in the present application is generated at the RRC 306.

As an embodiment, the third message in the present application is generated at the PHY 301 or the PHY 351.

As an embodiment, the first transport block in the present application is generated at the MAC 302 or the MAC 352.

As an embodiment, the L2 layer 305 belongs to a high layer.

As an embodiment, the RRC sublayer 306 in the L3 layer belongs to a high layer.

### Embodiment 4

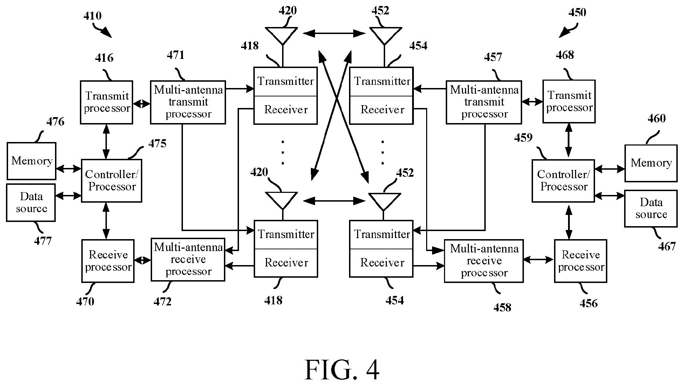

Embodiment 4 exemplarily shows a schematic diagram of a hardware module of a communication device according to an embodiment of the present application, as shown in FIG. 4. FIG. 4 is a block diagram of a first communication device 450 and a second communication device 410 communicating with each other in an access network.

The first communication device 450 includes a controller/processor 459, a memory 460, a data source 467, a transmit processor 468, a receive processor 456, a multi-antenna transmit processor 457, a multi-antenna receive processor 458, a transmitter/receiver 454, and an antenna 452.

The second communication device 410 includes a controller/processor 475, a memory 476, a data source 477, a receive processor 470, a transmit processor 416, a multi-antenna receive processor 472, a multi-antenna transmit processor 471, a transmitter/receiver 418, and an antenna 420.

During transmission from the second communication device 410 to the first communication device 450, at the second communication device 410, an upper data packet from a core network or an upper data packet from the data source 477 is provided to the controller/processor 475. The core network and the data source 477 indicate all protocol layers above an L2 layer. The controller/processor 475 implements the functionality of the L2 layer. During transmission from the second communication device 410 to the first communication device 450, the controller/processor 475 provides header compression, encryption, packet segmentation and reordering, multiplexing between logical and transport channels, and radio resource assignment to the first communication device 450 based on various priority measures. The controller/processor 475 is further responsible for retransmission of a lost packet and signaling to the first communication device 450. The transmit processor 416 and the multi-antenna transmit processor 471 implement various signal processing functions for an L1 layer (i.e. a physical layer). The transmit processor 416 implements coding and interleaving to promote forward error correction (FEC) at the second communication device 410, and mapping of a signal cluster based on various modulation schemes (for example, binary phase shift keying (BPSK), quadrature phase shift keying (QPSK), M phase shift keying (M-PSK), and M quadrature amplitude modulation (M-QAM)). The multi-antenna transmit processor 471 performs digital space precoding on coded and modulated symbols, including codebook-based precoding and non-codebook-based precoding, and beamforming processing, to generate one or more space streams. Then, the transmit processor 416 maps each space stream to a subcarrier, and multiplexes the space stream with a reference signal (for example, pilot) in a time domain and/or a frequency domain, and then uses inverse fast Fourier transform (IFFT) to generate a physical channel carrying a time domain multi-carrier symbol stream. Subsequently, the multi-antenna transmit processor 471 sends an analog precoding/beamforming operation on the time domain multi-carrier symbol stream. Each transmitter 418 converts a baseband multi-carrier symbol stream provided by the multi-antenna transmit processor 471 into a radio frequency stream, and then provides the radio frequency stream to different antennas 420.

During transmission from the second communication device 410 to the first communication device 450, each receiver 454 receives, at the first communication device 450, a signal by using the corresponding antenna 452. Each receiver 454 recovers information modulated onto a radio frequency carrier, converts the radio frequency stream into the baseband multi-carrier symbol stream, and provides the baseband multi-carrier symbol stream to the receive processor 456. The receive processor 456 and the multi-antenna receive processor 458 implement various signal processing functions of the L1 layer. The multi-antenna receive processor 458 receives an analog precoding/beamforming operation on the baseband multi-carrier symbol stream from the receiver 454. The receive processor 456 converts, by using fast Fourier transform (FFT), the baseband multi-carrier symbol stream on which the analog precoding/beamforming operation is received from a time domain to a frequency domain. In the frequency domain, a physical layer data signal and a reference signal are demultiplexed by the receive processor 456, where the reference signal is used for channel estimation, and after multi-antenna detection is performed on the data signal in the multi-antenna receive processor 458, any space stream that uses the first communication device 450 as a destination is recovered. A symbol in each space stream is demodulated and recovered in the receive processor 456, and a soft decision is generated. Subsequently, the receive processor 456 decodes and deinterleaves the soft decision to recover upper data and a control signal transmitted by the second communication device 410 on the physical channel. Subsequently, the upper data and the control signal are provided to the controller/processor 459. The controller/processor 459 implements a function of the L2 layer. The controller/processor 459 may be associated with the memory 460 that stores a program code and data. The memory 460 may be referred to as a computer-readable medium. During transmission from the second communication device 410 to the first communication device 450, the controller/processor 459 provides demultiplexing, packet reassembly, decryption, header decompression, and control signal processing between the transport and logical channels to recover the upper data packet from the second communication device 410. Subsequently, the upper data packet is provided to all protocol layers above the L2 layer. Various control signals may be provided to L3 for processing by L3.

During transmission from the first communication device 450 to the second communication device 410, the data source 467 is used at the first communication device 450 to provide the upper data packet to the controller/processor 459. The data source 467 indicates all the protocol layers above the L2 layer. Similar to a sending function described for the second communication device 410 in transmission from the second communication device 410 to the first communication device 450, the controller/processor 459 implements header compression and encryption, packet segmentation and reordering, and multiplexing between the logical and transport channels, and implements the L2 layer function for a user plane and a control plane. The controller/processor 459 is further responsible for retransmission of a lost packet and signaling to the second communication device 410. The transmit processor 468 performs modulation mapping and channel coding. The multi-antenna transmit processor 457 performs digital multi-antenna space precoding, including codebook-based precoding and non-codebook-based precoding, and beamforming. Subsequently, the transmit processor 468 modulates a generated space stream into a multi-carrier/single-carrier symbol stream. After performing an analog precoding/beamforming operation in the multi-antenna transmit processor 457, the multi-carrier/single-carrier symbol stream is provided to different antennas 452 by using the transmitter 454. Each transmitter 454 first converts a baseband symbol stream provided by the multi-antenna transmit processor 457 into a radio frequency symbol stream, and then provides the radio frequency symbol stream to the antenna 452.

During transmission from the first communication device 450 to the second communication device 410, a function of the second communication device 410 is similar to a receiving function of the first communication device 450 described in transmission from the second communication device 410 to the first communication device 450. Each receiver 418 receives a radio frequency signal by using the corresponding antenna 420, converts the received radio frequency signal into a baseband signal, and provides the baseband signal to the multi-antenna receive processor 472 and the receive processor 470. The receive processor 470 and the multi-antenna receive processor 472 jointly implement a function of the L1 layer. The controller/processor 475 implements the function of the L2 layer. The controller/processor 475 may be associated with the memory 476 that stores a program code and data. The memory 476 may be referred to as a computer-readable medium. During transmission from the first communication device 450 to the second communication device 410, the controller/processor 475 provides demultiplexing, packet reassembly, decryption, header decompression, and control signal processing between the transport and logical channels to recover the upper data packet from the first communication device 450. The upper data packet from the controller/processor 475 may be provided to the core network or all the protocol layers above the L2 layer, or various control signals may be provided to the core network or L3 for processing by L3.

As an embodiment, the first communication device 450 includes: at least one processor and at least one memory. The at least one memory includes a computer program code. The at least one memory and the computer program code are configured to be used with the at least one processor. The first communication device 450 at least performs: receiving a first message, where the first message indicates that an HARQ feedback is disabled; receiving a first wireless signal in a first RRC state, where the first wireless signal is scrambled by a first multicast RNTI; and failing to decode the first wireless signal. A first transport block is used for generating the first wireless signal. Whether to monitor retransmission of the first transport block in a first time window is related to the first RRC state. When the first wireless signal is received in the first RRC state, which is an RRC inactive state, the retransmission of the first transport block is monitored in the first time window. and when the first wireless signal is received in the first RRC state, which is an RRC state other than the RRC inactive state, the retransmission of the first transport block needs not (needs not) to be monitored in the first time window; and the first time window is a maximum duration for which multicast HARQ retransmission is received.

As an embodiment, the first communication device 450 includes: a memory storing a computer-readable instruction program. The computer-readable instruction program generates actions when being executed by at least one processor. The actions include: receiving a first message, where the first message indicates that an HARQ feedback is disabled; receiving a first wireless signal in a first RRC state, where the first wireless signal is scrambled by a first multicast RNTI; and failing to decode the first wireless signal. A first transport block is used for generating the first wireless signal. Whether to monitor retransmission of the first transport block in a first time window is related to the first RRC state. When the first wireless signal is received in the first RRC state, which is an RRC inactive state, the retransmission of the first transport block is monitored in the first time window. and when the first wireless signal is received in the first RRC state, which is an RRC state other than the RRC inactive state, the retransmission of the first transport block needs not (needs not) to be monitored in the first time window; and the first time window is a maximum duration for which multicast HARQ retransmission is received.

As an embodiment, the second communication device 410 includes: at least one processor and at least one memory. The at least one memory includes a computer program code. The at least one memory and the computer program code are configured to be used with the at least one processor. The second communication device 410 at least performs: sending a first message, where the first message indicates that an HARQ feedback is disabled; and sending a first wireless signal, where the first wireless signal is scrambled by a first multicast RNTI. Decoding the first wireless signal fails. A first transport block is used for generating the first wireless signal. Whether a receiver of the first message monitors retransmission of the first transport block in a first time window is related to the first RRC state in which the first wireless signal is received. When the first wireless signal is received in the first RRC state, which is an RRC inactive state, the retransmission of the first transport block is monitored in the first time window. When the first wireless signal is received in the first RRC state, which is an RRC state other than the RRC inactive state, the retransmission of the first transport block needs not (needs not) to be monitored in the first time window. The first time window is a maximum duration for which multicast HARQ retransmission is received.

As an embodiment, the second communication device 410 includes: a memory storing a computer-readable instruction program. The computer-readable instruction program generates actions when being executed by at least one processor. The actions include: sending a first message, where the first message indicates that an HARQ feedback is disabled; and sending a first wireless signal, where the first wireless signal is scrambled by a first multicast RNTI. Decoding the first wireless signal fails. A first transport block is used for generating the first wireless signal. Whether a receiver of the first message monitors retransmission of the first transport block in a first time window is related to the first RRC state in which the first wireless signal is received. When the first wireless signal is received in the first RRC state, which is an RRC inactive state, the retransmission of the first transport block is monitored in the first time window. When the first wireless signal is received in the first RRC state, which is an RRC state other than the RRC inactive state, the retransmission of the first transport block needs not (needs not) to be monitored in the first time window. The first time window is a maximum duration for which multicast HARQ retransmission is received.

As an embodiment, the first communication device 450 corresponds to the first node in the present application.

As an embodiment, the second communication device 410 corresponds to the second node in the present application.

As an embodiment, the first communication device 450 is a UE.

As an embodiment, the first communication device 450 is a relay node.

As an embodiment, the first communication device 450 is a user equipment supporting V2X.

As an embodiment, the first communication device 450 is an in-vehicle device.

As an embodiment, the first communication device 450 is an RSU.

As an embodiment, the first communication device 410 is a base station device (gNB/eNB).

As an embodiment, the second communication device 410 is a base station device (gNB/eNB).

As an embodiment, the second communication device 410 is a base station device supporting V2X.

As an embodiment, the second communication device 410 is an in-vehicle device.

As an embodiment, the second communication device 410 is an RSU device.

As an embodiment, the second communication device 410 is a UE.

As an embodiment, the second communications device 410 is a relay node.

As an embodiment, the second communication device 410 is a user equipment supporting V2X.

As an embodiment, at least one of the antenna 420, the transmitter 418, the multi-antenna transmit processor 471, the transmit processor 416, or the controller/processor 475 is used for sending a first message in the present application.

As an embodiment, at least one of the antenna 452, the receiver 454, the multi-antenna receive processor 458, the receive processor 456, or the controller/processor 459 is used for receiving the first message in the present application.

As an embodiment, at least one of the antenna 420, the transmitter 418, the multi-antenna transmit processor 471, the transmit processor 416, or the controller/processor 475 is used for sending a second message in the present application.

As an embodiment, at least one of the antenna 452, the receiver 454, the multi-antenna receive processor 458, the receive processor 456, or the controller/processor 459 is used for receiving the second message in the present application.

As an embodiment, at least one of the antenna 420, the transmitter 418, the multi-antenna transmit processor 471, the transmit processor 416, or the controller/processor 475 is used for sending a third message in the present application.

As an embodiment, at least one of the antenna 452, the receiver 454, the multi-antenna receive processor 458, the receive processor 456, or the controller/processor 459 is used for receiving the third message in the present application.

As an embodiment, at least one of the antenna 420, the transmitter 418, the multi-antenna transmit processor 471, the transmit processor 416, or the controller/processor 475 is used for sending a first wireless signal in the present application.

As an embodiment, at least one of the antenna 452, the receiver 454, the multi-antenna receive processor 458, the receive processor 456, or the controller/processor 459 is used for receiving the first wireless signal in the present application.

### Embodiment 5

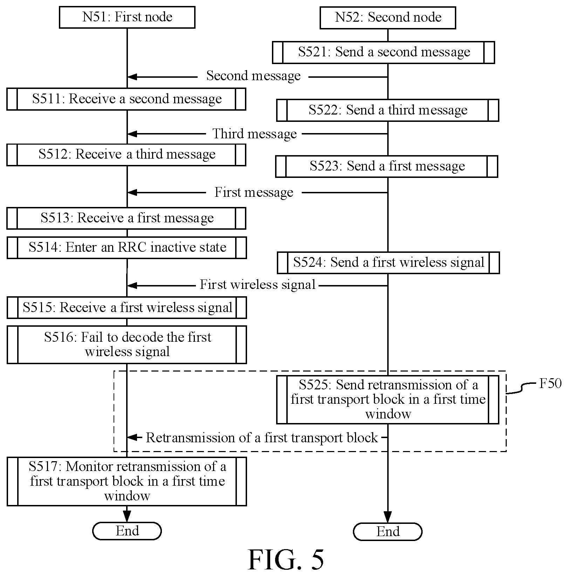

Embodiment 5 exemplarily shows a transmission flowchart of a wireless signal according to an embodiment of the present application, as shown in FIG. 5. In FIG. 5, a first node N51 and a second node N52 communicate with each other by using an air interface. It should be particularly noted that the sequence in this example does not limit a signal transmission sequence and an implementation sequence in the present application. The step in a dashed box F50 is optional.

For **the first node N51,** a second message is received in step S511. A third message is received in step S512. A first message is received in step S513. An RRC inactive state is entered in step S514. A first wireless signal is received in step S515. Decoding the first wireless signal fails in step S516. Retransmission of a first transport block is monitored in a first time window in step S517.

For **the second node N52,** a second message is sent in step S521. A third message is sent in step S522. A first message is sent in step S523. A first wireless signal is sent in step S524. Retransmission of a first transport block is sent in a first time window in step S525.

In Embodiment 5, a first message is received. The first message indicates that an HARQ feedback is disabled. A first wireless signal is received in a first RRC state. The first wireless signal is scrambled by a first multicast RNTI. Decoding the first wireless signal fails. A first transport block is used for generating the first wireless signal. Whether to monitor retransmission of the first transport block in a first time window is related to the first RRC state. When the first wireless signal is received in the first RRC state, which is an RRC inactive state, the retransmission of the first transport block is monitored in the first time window. When the first wireless signal is received in the first RRC state, which is an RRC state other than the RRC inactive state, the retransmission of the first transport block needs not (needs not) to be monitored in the first time window. The first time window is a maximum duration for which multicast HARQ retransmission is received. The monitoring the retransmission of the first transport block in the first time window when the first wireless signal is received in the first RRC state, which is an RRC inactive state, is performed only when all conditions in a first condition set are satisfied. The first condition set includes a first condition. A channel quality of a first cell being worse than a first threshold is used for determining that the first condition is satisfied. The first cell is a serving cell of the first node. A second message is received. The second message indicates a first expiration value and a second expiration value. The first expiration value is used for determining that the first timer expires. The second expiration value is used for determining that the second timer expires. A third message is received before receiving the first message. The third message indicates that the HARQ feedback is enabled. The first message indicates that the first node enters the RRC inactive state.

As an embodiment, the second node N52 is a maintenance base station of a serving cell of the first node N51.

As an embodiment, the second node N52 is a maintenance base station of a master cell group (master cell group, MCG) of the first node N51.

As an embodiment, the second node N52 is a maintenance base station of a secondary cell group (Secondary cell group, SCG) of the first node N51.

As an embodiment, the second node N52 is a transmit/receive point (Transmit/Receive Point, TRP) of the first node N51.

As an embodiment, the second node N52 is a maintenance base station of a primary cell (primary cell) of the first node N51.

As an embodiment, the second node N52 is a maintenance base station of a secondary cell (secondary cell) of the first node N51.

As an embodiment, the second node N52 is a maintenance base station of a special cell (special cell, SpCell) of the first node N51.

It should be noted that the sending sequence of the second message and the third message may be exchanged, or the second message and the third message may be simultaneously sent.

It should be noted that this embodiment is applicable to a scenario in which the first RRC state is an RRC inactive state, namely a scenario in which the first node enters the RRC inactive state from an RRC connected state and receives the first wireless signal in the RRC inactive state.

As an embodiment, a second message is received. The second message indicates a first expiration value and a second expiration value.

As an embodiment, the second message is a high layer message.

As an embodiment, the second message is an RRC signaling.

As a sub-embodiment of the foregoing embodiment, the RRC signaling is RRCReconfiguration (RRC reconfiguration).

As a sub-embodiment of the foregoing embodiment, the RRC signaling is RRCRelease (RRC release).

As an embodiment, the second message includes all or some of IEs (Information Element) in an RRC signaling.

As an embodiment, the second message includes all or some fields (Field) of an IE (Information Element) in an RRC signaling.

As an embodiment, the second message is a system message.

As an embodiment, the second message is an SIB (System Information Block) message.

As an embodiment, the second message is used for configuring a DRX parameter for MBS multicast transmission.

As an embodiment, the second message includes DRX-ConfigPTM (point-to-multipoint transmission DRX configuration).

As an embodiment, the first expiration value is used for determining that the first timer expires.

As an embodiment, the second expiration value is used for determining that the second timer expires.

As an embodiment, a third message is received before receiving the first message. The third message indicates that the HARQ feedback is enabled. The first message indicates that the first node enters the RRC inactive state.

As an embodiment, the first node is in the RRC connected state when receiving the third message.

As an embodiment, the third message is an RRC signaling.

As an embodiment, the third message is RRCReconfiguration (RRC reconfiguration).

As an embodiment, the third message includes all or some of IEs in an RRC signaling.

As an embodiment, the third message includes all or some fields (Field) of an IE in an RRC signaling.

As an embodiment, the third message includes an harq-FeedbackEnablerMulticast field. A value of the harq-FeedbackEnablerMulticast field is enabled (enabled), indicating that the HARQ feedback is enabled.

As an embodiment, the third message includes an harq-FeedbackEnablerMulticast field. A value of the harq-FeedbackEnablerMulticast field is dci-enabler (DCI enabler).

As a sub-embodiment of the foregoing embodiment, an Enabling/disabling HARQ-ACK feedback indication field included in DCI scheduling at least one wireless signal indicates that the HARQ feedback is enabled. The at least one wireless signal is scrambled by the first multicast RNTI.

As an embodiment, the third message is used for configuring parameters related to multicast transmission.

As an embodiment, the third message and the second message belong to a same RRC signaling.

As an embodiment, the third message and the second message are two IEs in the same RRC signaling.

As an embodiment, the third message and the second message belong to different RRC signaling.

As an embodiment, the first processor enters an RRC inactive state in response to receiving the first message. The first message is RRC release.

As an embodiment, the first message is not used for releasing a DRX configuration for MBS multicast transmission.

As an embodiment, the first message is not used for releasing DRX-ConfigPTM.

As an embodiment, the first message is not used for releasing PUCCH resources configured for the first node.

As an embodiment, the monitoring the retransmission of the first transport block in the first time window when the first wireless signal is received in the first RRC state, which is an RRC inactive state, is performed only when all conditions in a first condition set are satisfied.

As an embodiment, when the first wireless signal is received in the first RRC state, which is an RRC inactive state, and only when all the conditions in the first condition set are satisfied, the first receiver monitors the retransmission of the first transport block in the first time window.

As an embodiment, when the first wireless signal is received in the first RRC state, which is an RRC inactive state, and when any condition in the first condition set is not satisfied, the retransmission of the first transport block needs not to be monitored in the first time window.

As an embodiment, the first condition set includes a first condition.

As an embodiment, the channel quality of the first cell being worse than the first threshold is used for determining that the first condition is satisfied.

As an embodiment, the first condition is that the channel quality of the first cell is worse than the first threshold.

As an embodiment, the monitoring the retransmission of the first transport block in the first time window when the first wireless signal is received in the first RRC state, which is an RRC inactive state, is performed only when any condition in a first condition set are satisfied. The first condition set includes a first condition. A channel quality of a first cell being not better than a first threshold is used for determining that the first condition is satisfied. The first cell is a serving cell of the first node.

As an embodiment, the channel quality of the first cell being not better than the first threshold is used for determining that the first condition is satisfied.

As an embodiment, the first condition is that the channel quality of the first cell is not better than the first threshold.

As an embodiment, the first condition set includes that an electricity quantity of the first node is equal to a second threshold.

As an embodiment, the first condition set includes that the electricity quantity of the first node is greater than the second threshold.

As an embodiment, the first condition set includes that a DRX is configured for MBS multicast transmission.

As an embodiment, the channel quality of the first cell is obtained by measurement on the first cell.

As an embodiment, the measurement further includes processing after the measurement. The processing includes layer 3 filtering or other common filtering, which are not listed one by one herein.

As an embodiment, when the channel quality of the first cell is less than the first threshold, the channel quality of the first cell is worse than the first threshold.

As an embodiment, when the channel quality of the first cell is not greater than the first threshold, the channel quality of the first cell is not better than the first threshold.

As a sub-embodiment of the foregoing two embodiments, the channel quality of the first cell is an RSRP (Reference Signal Received Power) measured for the first cell.

As a sub-embodiment of the foregoing two embodiments, the channel quality of the first cell is RSRQ (Reference Signal Received Quality) for the measurement on the first cell.

As a sub-embodiment of the foregoing two embodiments, the channel quality of the first cell is an RS-SINR (reference signal signal-to-noise and interference ratio) for the measurement on the first cell.

As an embodiment, the measurement on the first cell includes measurement on a reference signal (reference signal) sent in the first cell.

As an embodiment, the measurement on the first cell includes measurement on an SSB (SS/PBCH block, synchronization signal/physical broadcast channel block) sent on the first cell.

As an embodiment, the measurement on the first cell includes measurement on a PBCH (Physical Broadcast Channel) sent in the first cell.

As an embodiment, the measurement on the first cell includes measurement on a PDCCH sent in the first cell.

As an embodiment, when the channel quality of the first cell is greater than the first threshold, the channel quality of the first cell is worse than the first threshold.

As an embodiment, when the channel quality of the first cell is not less than the first threshold, the channel quality of the first cell is not better than the first threshold.

As a sub-embodiment of the foregoing two embodiments, the channel quality of the first cell is a number of OOS (Out-Of-Sync) indications (indication) continuously received by the first cell.

As a sub-embodiment of the foregoing two embodiments, the channel quality of the first cell is a quantity of transport blocks that are continuously not successfully received by the first cell. A wireless signal generated by using the transport blocks is scrambled by the first multicast RNTI.

As a sub-embodiment of the foregoing two embodiments, the channel quality of the first cell is a quantity of transport blocks that are continuously not successfully received by the first cell. A wireless signal generated by using the transport blocks is scrambled by the first G-RNTI or scrambled by the first G-CS-RNTI.

As a sub-embodiment of the foregoing two embodiments, the channel quality of the first cell is a packet loss rate for the first cell.

As a sub-embodiment of the foregoing two embodiments, the channel quality of the first cell is a packet loss rate for the first cell within a preset duration.

As an embodiment, an OOS is indicated at a low layer of the first node to a high layer of the first node.

As an embodiment, the low layer is a physical layer, and the high layer is an RRC sublayer.

As an embodiment, the first threshold is configured by a network.

As an embodiment, the first threshold is pre-configured.

As an embodiment, the first threshold is invariable.

As an embodiment, the first threshold is variable.

As an embodiment, the first threshold is determined by the UE.

As an embodiment, the first threshold is only used for triggering monitoring of the retransmission of the first transport block.

As an embodiment, the first threshold is not used for triggering a radio link failure (Radio Link Failure, RLF).

As an embodiment, the first threshold is not used for triggering conversion of the RRC state.

As an embodiment, the first threshold is not used for triggering conversion to the RRC idle state.

As an embodiment, the first threshold is not used for triggering conversion to the RRC connected state.

As an embodiment, the first threshold is not used for triggering RRC connection resume (RRC connection resume).

As an embodiment, the second threshold is configured by a network.

As an embodiment, the second threshold is pre-configured.

As an embodiment, the second threshold is UE implementation-related.

As an embodiment, when the channel quality of the first cell is worse than a third threshold, the RRC inactive state is converted to the RRC connected state.

As an embodiment, when the channel quality of the first cell is worse than the third threshold, an RRC connection resume procedure is triggered.

As an embodiment, the third threshold is configured by a network.

As an embodiment, when the channel quality of the first cell is less than the third threshold, the channel quality of the first cell is worse than the third threshold. The third threshold is less than the first threshold.

As an embodiment, when the channel quality of the first cell is greater than the third threshold, the channel quality of the first cell is worse than the third threshold. The third threshold is greater than the first threshold.

As an embodiment, the first cell is a serving cell of the first node.

As an embodiment, the first cell is a suitable cell (suitable cell) of the first node.

As an embodiment, the first cell is an acceptable cell (acceptable cell) of the first node.

As an embodiment, that the first cell is a serving cell of the first node includes: the first cell is a resident cell of the first node.

As an embodiment, the maintenance base station of the first cell is the second node N52.

As an embodiment, a transmit/receive point (Transmit/Receive Point, TRP) of the first cell is the second node N52.

As an embodiment, the first cell includes a service region of the second node N52.

As an embodiment, the first cell includes a coverage region of the second node N52.

As an embodiment, a target receiver of the first wireless signal includes at least two nodes. The at least two nodes include the first node and a third node. The first node is in an RRC inactive state, and the third node is in an RRC connected state.

As an embodiment, whether the second node sends the retransmission of the first transport block in the first time window is determined by the second node.

As an embodiment, the second node determines, at least according to an HARQ feedback of the third node, whether to send the retransmission of the first transport block in the first time window. The HARQ feedback of the third node is enabled.

As a sub-embodiment of the foregoing embodiment, when the third node fails to decode the first wireless signal, the HARQ feedback of the third node is NACK. When decoding the first wireless signal by the third node succeeds, the HARQ feedback of the third node is ACK (an ACK/NACK feedback is configured) or there is no feedback (a NACK-only (NACK-only) feedback is configured).

### Embodiment 6

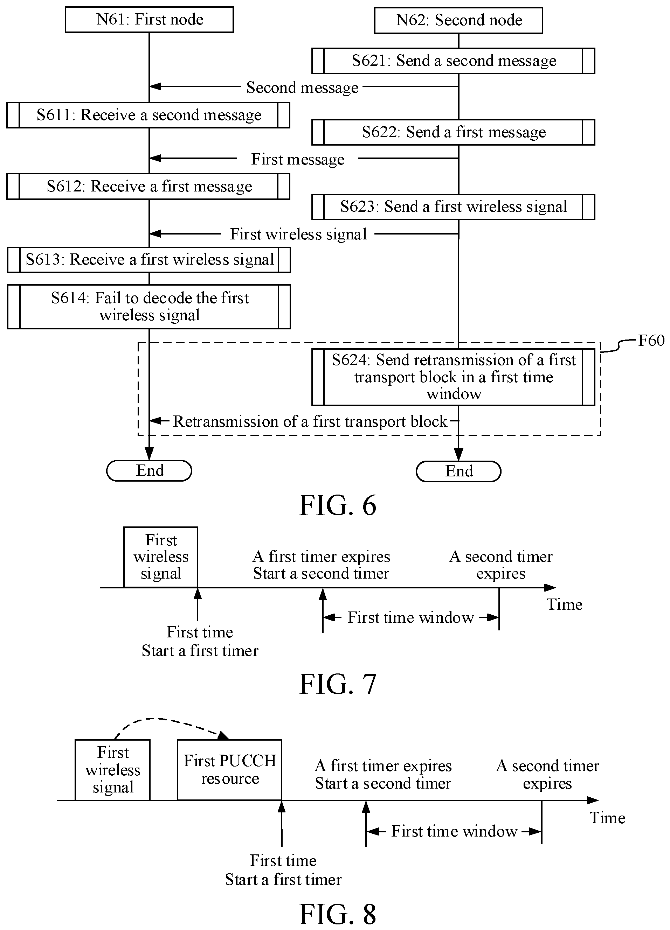

Embodiment 6 exemplarily shows another transmission flowchart of a wireless signal according to an embodiment of the present application, as shown in FIG. 6. In FIG. 6, a first node N61 and a second node N62 communicate with each other by using an air interface. It should be particularly noted that the sequence in this example does not limit a signal transmission sequence and an implementation sequence in the present application. The step in a dashed box F60 is optional.

For **the first node N61,** a second message is received in step S611. A first message is received in step S612. A first wireless signal is received in step S613. Decoding the first wireless signal fails in step S514.

For **the second node N62,** a second message is sent in step S621. A first message is sent in step S622. A first wireless signal is sent in step S623. Retransmission of a first transport block is sent in a first time window in step S624.

Different from Embodiment 5, this embodiment is applicable to a scenario in which a first RRC state is an RRC connected state. To be specific, this embodiment is applicable to a scenario in which the first node receives the first wireless signal in the RRC connected state.

It should be noted that the sending sequence of the second message and the first message may be exchanged, or the second message and the first message may be simultaneously sent.

As an embodiment, the second message and the first message belong to a same RRC signaling.

As an embodiment, the second message and the first message are two IEs in the same RRC signaling.

As an embodiment, the second message and the first message belong to different RRC signaling.

As an embodiment, in the RRC connected state, when the first message indicates that the HARQ feedback is disabled, the first node needs not to monitor the retransmission of the first transport block.

As an embodiment, a target receiver of the first wireless signal includes at least two nodes. The at least two nodes include the first node and a third node. The first node and the third node are both in an RRC connected state.

As an embodiment, whether the second node sends the retransmission of the first transport block in the first time window is determined by the second node.

### Embodiment 7

Embodiment 7 exemplarily shows a schematic diagram of a first wireless signal, a first time, a first timer, a second timer, and a first time window according to an embodiment of the present application, as shown in FIG. 7.

As an embodiment, the first processor starts the first timer at a first time when the first RRC state is an RRC inactive state, and starts the second timer in response to expiration of the first timer.

As an embodiment, the first processor skips starting the first timer at a first time when the first RRC state is an RRC state other than an RRC inactive state.

As an embodiment, when the first timer is not started, the second timer is not started.

As an embodiment, the first processor starts the first timer at a first time when the first RRC state is an RRC connected state, and skips starting the second timer when the first timer expires.

As an embodiment, the first processor stops the second timer when starting the first timer.

As an embodiment, the first timer and the second timer are used for a same HARQ process.

As an embodiment, the first timer and the second timer are used for a same DL (Downlink) HARQ process for MBS multicast.

As an embodiment, the first timer and the second timer are specific to an HARQ process corresponding to the first wireless signal.

As an embodiment, when the first wireless signal is dynamically scheduled, downlink control information (DCI) scheduling the first wireless signal indicates the HARQ process corresponding to the first wireless signal.

As an embodiment, when the first wireless signal is semi-continuously scheduled, at least a slot number in which the first wireless signal is located, a quantity of slots included in each subframe, a configured quantity of HARQ processes, and a semi-continuous scheduling period are all used for determining the HARQ process corresponding to the first wireless signal.

As an embodiment, when the semi-continuous scheduling is not configured with an HARQ process number offset, a slot number in which the first wireless signal is located, a quantity of slots included in each subframe, a configured quantity of HARQ processes, and a semi-continuous scheduling period are all used for determining the HARQ process corresponding to the first wireless signal. When the semi-continuous scheduling is configured with an HARQ process number offset, the slot number in which the first wireless signal is located, the quantity of slots included in each subframe, the configured quantity of HARQ processes, the semi-continuous scheduling period, and the HARQ process number offset are all used for determining the HARQ process corresponding to the first wireless signal.

As an embodiment, reference may be made to the description in 3GPP TS38.321 for details about how to obtain the HARQ process number in the semi-persistent scheduling. Details are not described herein again.

As an embodiment, the first timer and the second timer are separately maintained at an MAC sublayer.

As an embodiment, the first timer and the second timer are separately DRX-related timers.

As an embodiment, the first timer and the second timer are separately DRX-related timers configured for unicast transmission.

As an embodiment, the first timer and the second timer are separately DRX-related HARQ retransmission timers configured for unicast transmission.

As an embodiment, the first timer and the second timer are separately DRX-related timers configured for MBS multicast.

As an embodiment, the first timer and the second timer are separately DRX-related HARQ retransmission timers configured for MBS multicast.

As an embodiment, the first timer indicates a shortest duration before a downlink multicast assignment (DL multicast assignment) of HARQ retransmission expected by a MAC entity of the first node. The second timer indicates a maximum duration for which downlink multicast retransmission is received.

As an embodiment, the first timer is drx-HARQ-RTT-TimerDL-PTM (downlink point-to-multipoint DRX HARQ round-trip time timer), and the second timer is drx-RetransmissionTimerDL-PTM (downlink point-to-multipoint DRX retransmission timer).

As an embodiment, the first timer is drx-HARQ-RTT-TimerDL (downlink DRX HARQ round-trip time timer), and the second timer is drx-RetransmissionTimerDL (downlink DRX retransmission timer).

As an embodiment, the first time is not earlier than a receiving time of the first wireless signal.

As an embodiment, the first time window is time when the second timer is in an operating state.

As an embodiment, when the second timer is in the operating state, the retransmission of the first transport block is monitored.

As an embodiment, when the first multicast RNTI is in an active time (active time), the retransmission of the first transport block is monitored. The active time includes time when the second timer is in the operating state.

As an embodiment, the first time window is the second timer.

As an embodiment, the first time window is drx-RetransmissionTimerDL-PTM.

As an embodiment, the first time window is drx-RetransmissionTimerDL.

As an embodiment, the monitoring retransmission of the first transport block includes: starting the first timer at the first time; and starting the second timer in response to expiration of the first timer.

As an embodiment, that the retransmission of the first transport block needs not to be monitored includes: the first timer is not started.

As an embodiment, that the retransmission of the first transport block needs not to be monitored includes: the second timer is not started when the first timer expires.

As an embodiment, when the first timer is not started or the second timer is not started, the first time window is time included in the first time in which duration indicated by the first expiration value is passed and duration indicated by the second expiration value starts to last.

As an embodiment, the first time is a first symbol immediately after the first wireless signal ends.

As an embodiment, the first time is a starting time of a first symbol immediately after the first wireless signal ends.

As an embodiment, that the first wireless signal ends includes: an ending time of a last symbol occupied by the first wireless signal.

As an embodiment, that the first wireless signal ends includes: an ending time of a slot to which a last symbol occupied by the first wireless signal belongs.

As an embodiment, that the first wireless signal ends includes: an ending time of a subframe to which a last symbol occupied by the first wireless signal belongs.

As an embodiment, the symbol is an OFDM (Orthogonal Frequency Division Multiplexing) symbol.

As an embodiment, the symbol is reserved for a Uu air interface.

In the figure of Embodiment 7, the first time is the ending time of the last symbol occupied by the first wireless signal.

### Embodiment 8

Embodiment 8 exemplarily shows a schematic diagram of a first wireless signal, a first PUCCH resource, a first time, a first timer, a second timer, and a first time window according to an embodiment of the present application, as shown in FIG. 8.

As an embodiment, the first PUCCH resource occupies at least one symbol.

As an embodiment, the first time is a first symbol immediately after a first PUCCH resource ends. The first PUCCH resource is configured for a feedback specific to the first wireless signal.

As an embodiment, that a first PUCCH resource ends includes: an ending time of a last symbol occupied by the first PUCCH.

As an embodiment, that a first PUCCH resource ends includes: an ending time of a slot to which a last symbol occupied by the first PUCCH belongs.

As an embodiment, that a first PUCCH resource ends includes: an ending time of a subframe to which a last symbol occupied by the first PUCCH belongs.

As an embodiment, the first PUCCH resource is configured by a network.

As an embodiment, the first PUCCH resource is configured for uplink control information.

As an embodiment, the first PUCCH resource is configured for an HARQ feedback specific to a decoding result of the first wireless signal.

As an embodiment, the first PUCCH resource is configured for an ACK/NACK (ACK/NACK)-based HARQ feedback.

As an embodiment, the first PUCCH resource is configured for a NACK-only (NACK-only)-based HARQ feedback.

As an embodiment, the first PUCCH resource is configured for the first node.

As an embodiment, the first PUCCH resource is configured for at least two nodes, and the first PUCCH resource is used for a NACK-only HARQ feedback.

As an embodiment, the first node does not send the HARQ feedback specific to the decoding result of the first wireless signal over the first PUCCH resource.

As an embodiment, when the first wireless signal is PSSCH, the first time is a first symbol immediately after a first PSFCH resource ends. The first PSFCH resource is reserved for the HARQ feedback specific to the first wireless signal.

In the figure of Embodiment 8, the first time is the ending time of the last symbol occupied by the first PUCCH resource.

### Embodiment 9

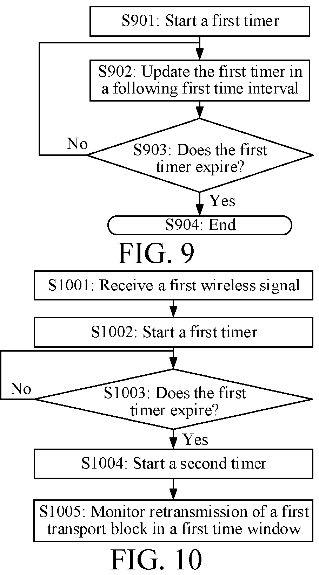

Embodiment 9 exemplarily shows a schematic diagram of operation of a first timer according to an embodiment of the present application, as shown in FIG. 9.

In Embodiment 9, a first timer is started in step S901. The first timer is updated in a following first time interval in step S902. Whether the first timer expires is determined in step S903. If yes, the process ends. If no, step S902 is performed again.

As an embodiment, the first time interval is 1 millisecond.

As an embodiment, the first time interval is one subframe (subframe) length.

As an embodiment, the first time interval is one slot (slot) length.

As an embodiment, the first time interval is one symbol (symbol) length.

As an embodiment, a value of the first timer is set to 0 when the first timer is started. The updating the first timer includes: adding 1 to the value of the first timer; and the first timer expiring when the value of the first timer is the first expiration value.

As an embodiment, the value of the first timer is set to the first expiration value when the first timer is started. The updating the first timer includes: subtracting 1 from the value of the first timer; and the first timer expiring when the value of the first timer is 0.

As an embodiment, the first expiration value includes Q1 symbolic numbers, where Q1 is a non-negative integer.

As an embodiment, when the first expiration value is 0, the first timer is stopped after being started.

As an embodiment, the first expiration value and the first time interval use a same measurement unit.

As an embodiment, the first timer is in an operating state after being started.

As an embodiment, when the first timer is in the operating state, the first timer is updated at each first time interval.

As an embodiment, when the first timer expires, the first timer is in a stop state.

As an embodiment, when the first timer is in the stop state, updating the first timer at each first time interval stops.

It should be noted that an operating procedure of the second timer is the same as an operating procedure of the first timer. Details are not described herein again.

As an embodiment, the second expiration value includes Q2 slot lengths (slot lengths), where Q2 is a positive integer.

### Embodiment 10

Embodiment 10 exemplarily shows a flowchart of signal processing in a first node according to an embodiment of the present application, as shown in FIG. 10.

In Embodiment 10, a first wireless signal is received in step S1001. A first timer is started in step S1002. Whether the first timer expires is determined in step S1003. If yes, step S1004 is performed. If no, step S1003 is performed again. A second timer is started in step S1004. Retransmission of a first transport block is monitored in a first time window in step S1005.

The figure in Embodiment 10 is applicable to a scenario in which the first RRC state is the RRC inactive state.

As an embodiment, a length of the first time window is variable.

As an embodiment, after the retransmission of the first transport block is monitored, the second timer stops operating.

As an embodiment, the foregoing method can reduce power consumption of a UE.

As an embodiment, the length of the first time window is invariable.

As an embodiment, after the retransmission of the first transport block is monitored, the second timer continues to operate.

### Embodiment 11

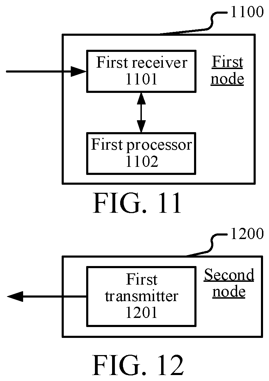

Embodiment 11 exemplarily shows a structural block diagram of a processing apparatus in a first node according to an embodiment of the present application, as shown in FIG. 11. In FIG. 11, a processing apparatus in a first node 1100 includes a first receiver 1101 and a first processor 1102. The first node 1100 is a UE.

In Embodiment 11, the first receiver 1101 receives a first message. The first message indicates that an HARQ feedback is disabled. A first wireless signal is received in a first RRC state. The first wireless signal is scrambled by a first multicast RNTI. Decoding the first wireless signal fails. A first transport block is used for generating the first wireless signal. Whether to monitor retransmission of the first transport block in a first time window is related to the first RRC state. When the first wireless signal is received in the first RRC state, which is an RRC inactive state, the retransmission of the first transport block is monitored in the first time window. When the first wireless signal is received in the first RRC state, which is an RRC state other than the RRC inactive state, the retransmission of the first transport block needs not (needs not) to be monitored in the first time window. The first time window is a maximum duration for which multicast HARQ retransmission is received.

As an embodiment, the monitoring the retransmission of the first transport block in the first time window when the first wireless signal is received in the first RRC state, which is an RRC inactive state, is performed only when all conditions in a first condition set are satisfied. The first condition set includes a first condition. A channel quality of a first cell being worse than a first threshold is used for determining that the first condition is satisfied. The first cell is a serving cell of the first node.

As an embodiment, the first processor 1102 starts a first timer at a first time. The first time is not earlier than a receiving time of the first wireless signal. A second timer is started in response to expiration of the first timer. The first time window is time when the second timer is in an operating state. The first RRC state is the RRC inactive state. The first timer and the second timer are separately specific to an HARQ process corresponding to the first wireless signal.

As an embodiment, the first processor 1102 starts a first timer at a first time. The first time is not earlier than a receiving time of the first wireless signal. A second timer is started in response to expiration of the first timer. The first time window is time when the second timer is in an operating state. The first RRC state is the RRC inactive state. The first timer and the second timer are separately specific to an HARQ process corresponding to the first wireless signal. The first time is a first symbol immediately after the first wireless signal ends.

As an embodiment, the first processor 1102 starts a first timer at a first time. The first time is not earlier than a receiving time of the first wireless signal. A second timer is started in response to expiration of the first timer. The first time window is time when the second timer is in an operating state. The first RRC state is the RRC inactive state. The first timer and the second timer are separately specific to an HARQ process corresponding to the first wireless signal. The first time is a first symbol immediately after a first PUCCH resource ends. The first PUCCH resource is configured for an HARQ feedback specific to the first wireless signal.

As an embodiment, the first processor 1102 starts a first timer at a first time. The first time is not earlier than a receiving time of the first wireless signal. A second timer is started in response to expiration of the first timer. The first time window is time when the second timer is in an operating state. The first RRC state is the RRC inactive state. The first timer and the second timer are separately specific to an HARQ process corresponding to the first wireless signal. The first receiver 1101 receives a second message. The second message indicates a first expiration value and a second expiration value. The first expiration value is used for determining that the first timer expires. The second expiration value is used for determining that the second timer expires.

As an embodiment, the first receiver 1101 receives a third message before receiving the first message. The third message indicates that the HARQ feedback is enabled. The first message indicates that the first node enters the RRC inactive state.

As an embodiment, the first receiver 1101 includes the receiver 454 (including the antenna 452), the receive processor 456, the multi-antenna receive processor 458, and the controller/processor 459 in FIG. 4 of the present application.

As an embodiment, the first receiver 1101 includes at least one of the receiver 454 (including the antenna 452), the receive processor 456, the multi-antenna receive processor 458, or the controller/processor 459 in FIG. 4 of the present application.

As an embodiment, the first processor 1102 includes the controller/processor 459 in FIG. 4 of the present application.

### Embodiment 12

Embodiment 12 exemplarily shows a structural block diagram of a processing apparatus in a second node according to an embodiment of the present application, as shown in FIG. 12. In FIG. 12, a second node processing apparatus 1200 includes a first transmitter 1201. The second node 1200 is a base station.

In Embodiment 12, the first transmitter 1201 sends a first message. The first message indicates that an HARQ feedback is disabled. A first wireless signal is sent. The first wireless signal is scrambled by a first multicast RNTI. Decoding the first wireless signal fails. A first transport block is used for generating the first wireless signal. Whether a receiver of the first message monitors retransmission of the first transport block in a first time window is related to the first RRC state in which the first wireless signal is received. When the first wireless signal is received in the first RRC state, which is an RRC inactive state, the retransmission of the first transport block is monitored in the first time window. When the first wireless signal is received in the first RRC state, which is an RRC state other than the RRC inactive state, the retransmission of the first transport block needs not (needs not) to be monitored in the first time window. The first time window is a maximum duration for which multicast HARQ retransmission is received.

As an embodiment, the monitoring the retransmission of the first transport block in the first time window when the first wireless signal is received in the first RRC state, which is an RRC inactive state, is performed only when all conditions in a first condition set are satisfied. The first condition set includes a first condition. A channel quality of a first cell being worse than a first threshold is used for determining that the first condition is satisfied. The first cell is a serving cell of the receiver of the first message.

As an embodiment, the first timer is started at a first time. The first time is not earlier than a receiving time of the first wireless signal. The second timer is started in response to expiration of the first timer. The first time window is time when the second timer is in an operating state. The first RRC state is the RRC inactive state. The first timer and the second timer are separately specific to an HARQ process corresponding to the first wireless signal.

As an embodiment, the first timer is started at a first time. The first time is not earlier than a receiving time of the first wireless signal. The second timer is started in response to expiration of the first timer. The first time window is time when the second timer is in an operating state. The first RRC state is the RRC inactive state. The first timer and the second timer are separately specific to an HARQ process corresponding to the first wireless signal. The first time is a first symbol immediately after the first wireless signal ends.

As an embodiment, the first timer is started at a first time. The first time is not earlier than a receiving time of the first wireless signal. The second timer is started in response to expiration of the first timer. The first time window is time when the second timer is in an operating state. The first RRC state is the RRC inactive state. The first timer and the second timer are separately specific to an HARQ process corresponding to the first wireless signal. The first time is a first symbol immediately after a first PUCCH resource ends. The first PUCCH resource is configured for an HARQ feedback specific to the first wireless signal.

As an embodiment, the first timer is started at a first time. The first time is not earlier than a receiving time of the first wireless signal. The second timer is started in response to expiration of the first timer. The first time window is time when the second timer is in an operating state. The first RRC state is the RRC inactive state. The first timer and the second timer are separately specific to an HARQ process corresponding to the first wireless signal. The first transmitter 1201 sends a second message. The second message indicates a first expiration value and a second expiration value. The first expiration value is used for determining that the first timer expires. The second expiration value is used for determining that the second timer expires.

As an embodiment, the first transmitter 1201 sends a third message before sending the first message. The third message indicates that the HARQ feedback is enabled. The first message indicates that the receiver of the first message enters the RRC inactive state.

As an embodiment, the first transmitter 1201 includes the transmitter 418 (including the antenna 420), the transmit processor 416, the multi-antenna transmit processor 471, and the controller/processor 475 in FIG. 4 of the present application.

As an embodiment, the first transmitter 1201 includes at least one of the transmitter 418 (including the antenna 420), the transmit processor 416, the multi-antenna transmit processor 471, or the controller/processor 475 in FIG. 4 of the present application.

A person of ordinary skill in the art may understand that all or some of the steps of the foregoing method may be implemented by a program instructing relevant hardware. The program may be stored in a computer-readable storage medium, such as a read-only memory, a hard disk, or an optical disc. Optionally, all or some of the steps of the foregoing embodiments may alternatively be implemented by using one or more integrated circuits. Correspondingly, the modules and units in the foregoing embodiments may be implemented in a form of hardware, or may be implemented in a form of a software functional module. The present application is not limited to a combination of software and hardware in any particular form. A first-type communication node or UE or terminal in the present application includes, but is not limited to, a wireless communication device such as a mobile phone, a tablet, a laptop, a network adapter, a low-power device, an eMTC (enhanced Machine Type Communication) device, an NB-IoT device, an in-vehicle communication device, an aircraft, an airplane, an unmanned aerial vehicle, or a remote control airplane. A second-type communication node or base station or network side device in the present application includes, but is not limited to, a wireless communication device such as a macrocellular base station, a microcellular base station, a home base station, a relay base station, an eNB, a gNB, a TRP (Transmission and Reception Point), a relay satellite, a satellite base station, an aerial base station, a test device, for example, a transceiver apparatus or a signaling tester simulating some functions of a base station.

A person skilled in the art should understand that the present disclosure may be implemented in other specified forms without departing from the core or basic characteristics thereof. Therefore, the currently disclosed embodiments should be considered as descriptive rather than restrictive in any way. The scope of the present disclosure is determined by the appended claims rather than the foregoing description, and all modifications within the equivalent meanings and regions thereof are considered to be included therein.

## Claims

1. A first node used in wireless communication, comprising:
a first receiver, configured to: receive a first message, the first message indicating that an HARQ feedback is disabled; receive a first wireless signal in a first RRC state, the first wireless signal being scrambled by a first multicast RNTI; and fail to decode the first wireless signal,
wherein a first transport block is used for generating the first wireless signal; whether to monitor retransmission of the first transport block in a first time window is related to the first RRC state, when the first wireless signal is received in the first RRC state, which is an RRC inactive state, the retransmission of the first transport block is monitored in the first time window, and when the first wireless signal is received in the first RRC state, which is an RRC state other than the RRC inactive state, the retransmission of the first transport block needs not (needs not) to be monitored in the first time window; and the first time window is a maximum duration for which multicast HARQ retransmission is received.

2. The first node according to claim 1, wherein the monitoring the retransmission of the first transport block in the first time window when the first wireless signal is received in the first RRC state, which is an RRC inactive state, is performed only when all conditions in a first condition set are satisfied,
wherein the first condition set comprises a first condition, a channel quality of a first cell being worse than a first threshold is used for determining that the first condition is satisfied, and the first cell is a serving cell of the first node.

3. The first node according to claim 1 or 2, comprising:
a first processor, configured to: start a first timer at a first time, the first time being not earlier than a receiving time of the first wireless signal; and start a second timer in response to expiration of the first timer,
wherein the first time window is time when the second timer is in an operating state; the first RRC state is the RRC inactive state; and the first timer and the second timer are separately specific to an HARQ process corresponding to the first wireless signal.

4. The first node according to claim 3, wherein the first time is a first symbol immediately after the first wireless signal ends.

5. The first node according to claim 3, wherein the first time is a first symbol immediately after a first PUCCH resource ends,
wherein the first PUCCH resource is configured for an HARQ feedback specific to the first wireless signal.

6. The first node according to any one of claims 3 to 5, comprising:
the first receiver, configured to receive a second message, the second message indicating a first expiration value and a second expiration value,
wherein the first expiration value is used for determining that the first timer expires; and the second expiration value is used for determining that the second timer expires.

7. The first node according to any one of claims 1 to 6, comprising:
the first receiver, configured to receive a third message before receiving the first message, the third message indicating that the HARQ feedback is enabled,
wherein the first message indicates that the first node enters the RRC inactive state.

8. A second node used in wireless communication, comprising:
a first transmitter, configured to: send a first message, the first message indicating that an HARQ feedback is disabled; and send a first wireless signal, the first wireless signal being scrambled by a first multicast RNTI,
wherein decoding the first wireless signal fails; a first transport block is used for generating the first wireless signal; whether a receiver of the first message monitors retransmission of the first transport block in a first time window is related to the first RRC state in which the first wireless signal is received, when the first wireless signal is received in the first RRC state, which is an RRC inactive state, the retransmission of the first transport block is monitored in the first time window, and when the first wireless signal is received in the first RRC state, which is an RRC state other than the RRC inactive state, the retransmission of the first transport block needs not (needs not) to be monitored in the first time window; and the first time window is a maximum duration for which multicast HARQ retransmission is received.

9. A method in a first node used in wireless communication, comprising:
receiving a first message, the first message indicating that an HARQ feedback is disabled;
receiving a first wireless signal in a first RRC state, the first wireless signal being scrambled by a first multicast RNTI; and
failing to decode the first wireless signal,
wherein a first transport block is used for generating the first wireless signal; whether to monitor retransmission of the first transport block in a first time window is related to the first RRC state, when the first wireless signal is received in the first RRC state, which is an RRC inactive state, the retransmission of the first transport block is monitored in the first time window, and when the first wireless signal is received in the first RRC state, which is an RRC state other than the RRC inactive state, the retransmission of the first transport block needs not (needs not) to be monitored in the first time window; and the first time window is a maximum duration for which multicast HARQ retransmission is received.

10. A method in a second node used in wireless communication, comprising:
sending a first message, the first message indicating that an HARQ feedback is disabled; and
sending a first wireless signal, the first wireless signal being scrambled by a first multicast RNTI,
wherein decoding the first wireless signal fails; a first transport block is used for generating the first wireless signal; whether a receiver of the first message monitors retransmission of the first transport block in a first time window is related to the first RRC state in which the first wireless signal is received, when the first wireless signal is received in the first RRC state, which is an RRC inactive state, the retransmission of the first transport block is monitored in the first time window, and when the first wireless signal is received in the first RRC state, which is an RRC state other than the RRC inactive state, the retransmission of the first transport block needs not (needs not) to be monitored in the first time window; and the first time window is a maximum duration for which multicast HARQ retransmission is received.
